# FASCICULE DE BREVET EUROPEEN

(11) **EP 0 962 790 B1**
(45) Date de publication et mention de la délivrance du brevet: **18.10.2006**
(21) Numéro de dépôt: 99401171.6
(22) Date de dépôt: 12.05.1999
(51) Int. Cl.: G02B 6/02, G02B 6/293, H01S 3/06

(54) **Fibre optique filtrante courte**
Kurze filtrierende optische Faser
Short filtering optical fibre

(30) Priorité: 02.06.1998 FR 9806906
(43) Date de publication de la demande: 08.12.1999
(73) Titulaire: Avanex Corporation, Fremont, CA 94538 (US)
(72) Inventeur: Riant, Isabelle, 91120 Palaiseau (FR); Sansonetti, Pierre, 91120 Palaiseau (FR)
(74) Mandataire: Feray, Valérie

(56) Documents cités:
- WO-A-94/00784
- WO-A-97/08574
- WO-A-97/26571
- ELECTRONICS LETTERS, vol. 29, no. 2, 21 janvier 1993 (1993-01-21), pages 154-156,

## Description

La présente invention a pour objet un filtre fréquentiel pour modifier le spectre de transmission d'une fibre optique. Dans l'invention le filtre fréquentiel est réalisé dans une portion de fibre optique, modifiée pour lui conférer des aptitudes filtrantes.

On connaît dans le domaine des fibres optiques filtrantes la réalisation de réseaux de Bragg dans des sections de coeur de ces fibres optiques. Ces réseaux de Bragg sont réalisés par des changements d'indice périodiques dans le matériau de la fibre. Ceux-ci sont obtenus par une irradiation ultraviolette effectuée dans ces sections de coeur de fibre. Le changement d'indice de réfraction provoqué par une insolation lumineuse est appelé "effet photo-réfractif ". Cet effet est permanent. La propriété d'un matériau ayant un indice pouvant être modifié sous une telle irradiation lumineuse est appelé, ici, photosensibilité. Les caractéristiques de photosensibilité sont liées dans la technique actuelle à la présence d'un défaut de germanium dans la matrice silice de la fibre optique. D'autres dopants rendant le coeur de la fibre photosensible peuvent être utilisés. L'avantage du germanium est qu'il est normalement présent dans le coeur des fibres optiques car il permet d'augmenter l'indice de réfraction du coeur de la fibre par rapport à celui d'une gaine optique qui enrobe ce coeur. Cette augmentation d'indice, dite aussi marche d'indice, assure le guidage du signal lumineux dans le coeur de la fibre.

Lors de la fabrication d'une fibre optique sont successivement déposées à l'intérieur d'un tube des couches différentes de silice dopée ou non devant constituer progressivement, par leur adhésion sur la paroi interne du tube, les différentes couches constituant la fibre optique. Le diamètre d'une préforme ainsi constituée est homothétiquement plus grand que le diamètre de la fibre. Celle-ci est ensuite obtenue par échauffement et étirage de la préforme.

Pour réaliser le réseau de Bragg, on soumet à une irradiation ultraviolette sélective périodique une section du coeur de la fibre qui doit jouer le rôle de filtre. Par cette irradiation on réalise des altérations locales permanentes de l'indice de réfraction. Ces altérations sont liées à une modification chimique et structurelle des liaisons des atomes de germanium dans le coeur. La variation de la valeur de indice de réfraction du coeur de la fibre qui résulte de ces altérations peut atteindre quelques millièmes.

Le réseau se présente alors comme une modulation de l'indice de réfraction le long de la section formant un filtre atténuant.

WO97/08574 decrit un dispositif optique filtrant constitué par un coupleur directionnel formé de deux fibres optiques fusionnées entre elles dans une région de couplage centrale, dans laquelle se trouve ménagé un réseau d'altérations indicielles périodiques inclinées.

WO94/00784 décrit un réseau d'altérations indicielles périodiques d'environ 1 mm de long ménagé dans une fibre en verre de type B₂O₃.

WO97/26571 décrit un guide optique qui comprend une gaine photosensible d'un réseau de Bragg incliné pourvue.

Electronics Letters, Vol. 29. No. 2, Janvier 1993, pages 154-156, par R. Kashyap et al décrit un amplificateur optique comportant une fibre optique filtrante à réseau de Bragg, donnant lieu à une bande passante lisse.

Classiquement, lorsque les altérations du réseau d'indice sont perpendiculaires à l'axe de la fibre optique, la quantité de lumière non transmise par le filtre est réfléchie dans le coeur de la fibre optique avec un maximum de réflexion à la longueur d'onde de Bragg déterminée par une condition de résonance. Physiquement, un couplage est créé entre le mode fondamental se propageant co-directionnellement et le mode fondamental se propageant contra-directionnellement.

Selon la longueur de la section soumise à insolation, selon la période de reproduction des altérations le long de cette section, et selon la nature plus ou moins forte de l'altération (selon la nature plus ou moins importante de la variation de l'indice de réfraction à l'endroit des altérations), on peut respectivement modifier les caractéristiques de transmission suivantes : la largeur, la fréquence centrale du filtre, et le degré d'atténuation obtenu.

Pour de fortes variations d'indice photo-induites, il se produit également un couplage du mode fondamental dans des modes de gaine, à des longueurs d'onde plus courtes. Ceci peut être évité, selon l'article "Optical fiber design for strong gratings photimprinting with radiation mode suppression" présenté à la conférence OFC San Diego 95, Post Deadline 5, de E. DELEVAQUE et Al., par un dopage au germanium d'une partie de la gaine proche du coeur. Un co-dopant au fluor est alors ajouté dans la gaine pour rétablir la marche d'indice.

Dans une utilisation particulière, on a tenté avec de tels filtres de compenser des défauts de platitude du gain d'amplificateurs utilisés le long de liaisons optiques à très longue distance. En effet, sur de très longues distances, empruntant notamment des parcours sous-marins, l'atténuation kilométrique des ondes dans les fibres optiques est telle qu'il faut, de place en place, disposer des amplificateurs optiques. D'une manière connue ces amplificateurs présentent malheureusement l'inconvénient de favoriser, d'une manière systématique, certaines des composantes fréquentielles de la bande transmise.

Ce phénomène est d'autant plus gênant que de tels amplificateurs optiques sont utilisés dans des liaisons de type WDM (Wavelength Division Multiplexed) dans lesquelles différents canaux sont transportés par des porteuses optiques à différentes fréquences afin d'accroître la capacité globale et la modularité du système. Compte tenu du phénomène mis en jeu dans l'amplificateur optique, une telle favorisation serait rédhibitoire si on ne la compensait alors pas régulièrement. Dans cette application, il s'agit surtout d'aplatir le gain des amplificateurs optiques à fibre dopée à l'erbium. D'autres applications sont bien entendu envisageables.

Ce type de filtre à réseau de Bragg présente cependant l'inconvénient d'agir comme un réflecteur partiel du signal amplifié, pour les composantes concernées par le filtrage. Une partie du signal optique à ces fréquences est donc renvoyée par réflexion dans l'amplificateur optique. Il en résulte que, dans la section amplificatrice, le signal réfléchi par le filtre revient interférer, mais également que le signal rétrodiffusé par la fibre est renvoyé dans la ligne venant dégrader les caractéristiques de transmission.

Pour éviter cette réflexion il a été imaginé, notamment dans l'article "Wideband gain flattened erbium fibre amplifier using a photosensitive fibre blazed grating" de R. Kashyap, R. Wyatt et R. J. Campbell et publié dans Electronics Letters du 21 janvier 1993, vol. 29, n° 2, page 154 à 156, le principe d'incliner les franges représentatives des zones à modulation d'indice. Ceci peut être réalisé en faisant interférer deux faisceaux issus d'une source laser argon doublée en fréquence à 244 nm, et en inclinant la normale à la section servant de filtre par rapport à la bissectrice d'insolation des deux faisceaux. On peut également utiliser un masque de phase générant principalement deux ordres de diffraction +1 et -1, et un ordre zéro très faible. L'inclinaison est par exemple de huit degrés dans l'article décrit. L'avantage de l'inclinaison est de supprimer la réflexion le long du coeur de la fibre. En effet, cette inclinaison a pour effet de coupler le mode fondamental se propageant co-directionnellement avec des modes radiatifs contra-directionnels. Ces modes radiatifs sont très rapidement absorbés par la gaine, ils sont appelés modes de gaine. L'enveloppe spectrale de l'ensemble des composantes fréquentielles dans ces différents modes de gaine peut alors être utilisée comme caractéristique d'un filtre utilisé pour compenser le gain des amplificateurs optiques.

L'inconvénient présenté par cette technique se situe dans la sélectivité du filtre. En effet, en utilisant des fibres standards de télécommunication, il n'est pas possible, par exemple, avec un tel filtre à réseau de Bragg et à inclinaison des altérations, d'obtenir une bande spectrale du filtre inférieure à 20 nm. Il est possible en théorie de jouer sur le diamètre du coeur pour réduire la largeur de bande du filtre. Le filtre est ainsi plus sélectif si le diamètre de ce coeur est plus grand, par exemple 9 µm au lieu de 3µm. Mais cette augmentation du diamètre est limitée. De plus elle présente, entre autres inconvénients, celui de devoir réaliser des sections d'adaptation entre une fibre avec un coeur à grand diamètre, et une fibre avec un diamètre standard (de l'ordre déjà de 9 µm). Ces adaptations sont délicates à réaliser.

Selon le but recherché, l'atténuation par les modes de gaine est meilleure si on accroît la longueur du réseau mais la longueur du réseau ne peut plus jouer pour rétrécir la largeur de bande du filtre. En pratique plus l'angle est faible et plus le filtre peut être sélectif mais en même temps plus il est le lieu d'une émission résiduelle par réflexion, du type de celle des franges droites. A l'opposé plus l'angle est incliné, moins ce phénomène de réflexion se fait sentir mais plus la largeur de bande du filtre est grande, c'est-à-dire moins il est sélectif. Le compromis obtenu dans tous les cas n'est pas satisfaisant et on cherche à l'améliorer.

Un deuxième problème de ce type de filtre est lié à un rebond de filtrage dans une bande basse fréquence, voisine de la bande utile où a été réalisé le filtrage. Ce rebond est dû à la réflexion résiduelle, citée ci-dessus, dans le mode fondamental. Au départ, ce rebond n'est pas gênant puisque les amplificateurs optiques connus ont une bande spectrale limitée et que ce rebond de filtrage s'en trouve en dehors. Il doit néanmoins rester faible. Cependant, dans d'autres applications, notamment dans des applications terrestres, le filtre va être utilisé sélectivement, pour atténuer différentes composantes dans la bande utile. La place spectrale de ce rebond sera donc aussi dans la bande utile. Dans ces autres applications, ce rebond de filtrage est alors néfaste.

Troisièmement, on a précisé précédemment que l'atténuation spectrale n'est en fait que l'enveloppe d'atténuations à différentes composantes spectrales. Ceci signifie qu'à l'intérieur de cette enveloppe, des composantes spectrales sont effectivement filtrées, alors que d'autres le sont moins, voire pas du tout. Ceci est dû à la discrétisation des modes de gaine. Dans ces conditions, l'enveloppe de filtrage correspond à un assemblage de filtres discrets, à bande relativement étroite, et séparés les uns des autres par des espaces fréquentiels où le filtrage n'est pas réalisé. Un tel filtre ne peut donc pas être utilisé pour égaliser correctement le gain des amplificateurs optiques.

Dans l'invention on a résolu le troisième problème et on a obtenu un lissage des atténuations apportées par le filtre, dans la bande filtrée. Ce lissage est réalisé en raccourcissant la longueur du filtre. Il faut par exemple que la longueur de la section filtrante soit inférieure à 1 mm, de préférence égale à 0,7 mm, pour lisser le filtre.

L'invention a donc pour objet une fibre optique filtrante a réseau de Bragg telle que définie dans la revendication 1,

L'invention sera mieux comprise à la lecture de la description qui suit et de l'examen des figures qui l'accompagnent. Celles-ci ne sont données qu'à titre indicatif et nullement limitatif de l'invention. Les figures montrent :
- Figure 1: une préforme de fibre optique utilisable pour réaliser la fibre optique filtrante de l'invention ;
- Figure 2 : la représentation d'un procédé utilisable pour préparer la fibre optique de l'invention à sa fonction filtrante ;
- Figure 3 : un diagramme fréquentiel montrant, dans une application, des défauts d'amplification d'amplificateurs optiques à fibres dopées à l'erbium, et la correction apportée par le filtre de l'invention ;
- Figures 4a et 4b : des diagrammes de filtrage d'une section filtrante avec une longueur respectivement de 0,7 mm et 1,2 mm ;
- Figures 5a et 5b : des profils respectivement d'indice de réfraction et de photosensibilité du coeur et de la gaine de la fibre optique filtrante de l'invention ;
- Figures 6a à 7b : un profil, inversé, de photosensibilité mis préférentiellement en oeuvre dans l'invention et ses conséquences spectrales.

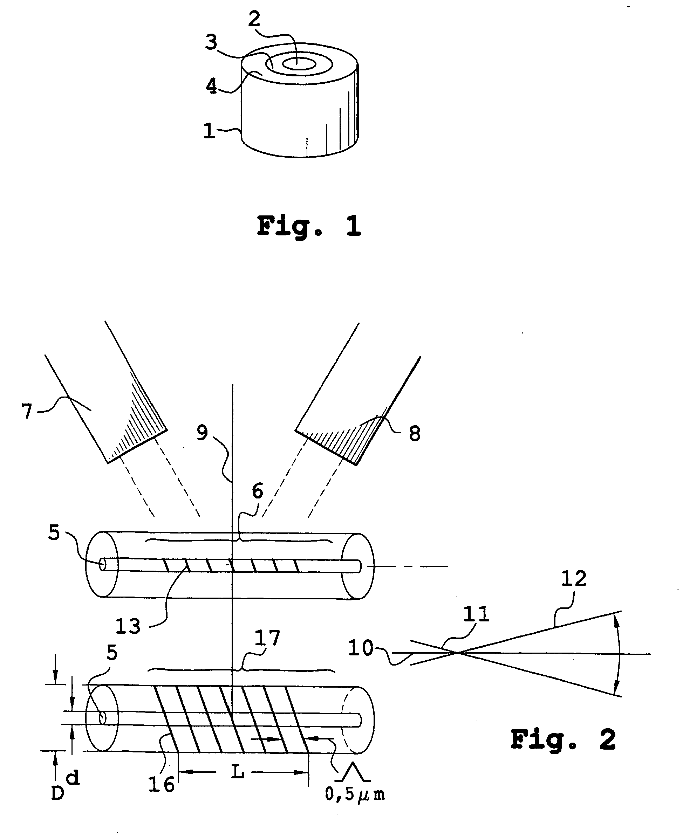

La figure 1 montre une préforme 1 de fibre optique. La préforme 1 comporte un premier cylindre 2 entouré par une couronne cylindrique intérieure 3 et une couronne cylindrique extérieure 4. Ce cylindre et ces couronnes représentent les différentes couches de matériaux présents dans la fibre optique quand elle est réalisée par étirage. Les dimensions radiales des cylindres et couronnes cylindriques 2 à 4 sont homothétiques des dimensions, bien plus faibles, des parties correspondantes dans la fibre optique, une fois qu'elle est fabriquée par étirage. En pratique, un coeur et une gaine de fibre correspondant respectivement aux couches 2 à 3 sont réalisés chacun en plusieurs couches. Les couches 2 à 3 sont ainsi dopées avec différents dopants au fur et à mesure de la réalisation de la préforme.

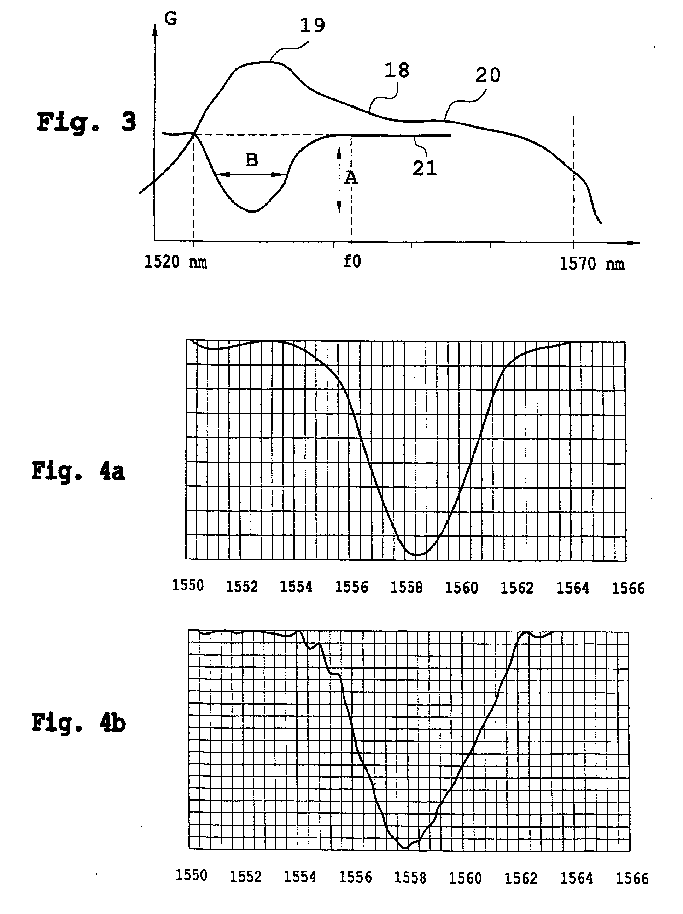

La figure 2 montre un procédé préféré d'insolation d'un matériau photosensible utilisable pour créer un réseau d'altérations indicielles, dit aussi réseau d'indice, à l'intérieur du coeur 5 d'une fibre. Dans une fibre de l'état de la technique, le coeur 5 de la fibre est dopé au moment de la fabrication du cylindre 2 avec du germanium. Ce germanium est soumis au moment de l'insolation, sur une longueur correspondant à une section filtrante 6, à un éclairement produit par deux faisceaux lasers 7 et 8, issus d'une source laser cohérente, inclinés l'une par rapport à l'autre. La bissectrice 9 de l'angle que ces faisceaux forment est orientée sensiblement perpendiculairement à l'axe 10 du coeur 5. Comme rapporté dans le document cité, les faisceaux lasers 7 et 8 peuvent être issus d'un laser argon doublé en fréquence à une longueur d'onde de 244 nm. Selon l'enseignement de ce document, en inclinant l'axe 10 vers des directions 11 ou 12 par rapport à la normale à la bissectrice 9, on peut obtenir que les franges d'interférence, et donc le réseau des altérations, se présentent sous une forme inclinée. On a représenté sur la figure 2, grossièrement, en coupe des tranches 13 de disques inclinées. Dans la pratique le degré d'altération évolue entre un minimum et un maximum progressivement entre chaque frange. Il n'y a pas vraiment de disques, mais la représentation est commode.

En variante, le réseau d'indice incliné peut aussi être réalisé par un dispositif à masque de phase.

Il est connu de fabriquer des coeurs 5 avec neuf micromètres de diamètre d. Ainsi la fibre standard SMF-28 de Corning Incorporated, New York, Etats Unis d'Amérique, est une fibre monomode avec un tel diamètre. Les contributions des cylindres 3 et 4 forment un ensemble gaine-tube de ces fibres. Dans un exemple notamment celui indiqué ci-dessus, le diamètre extérieur D de cet ensemble est de l'ordre de 125 à 130 micromètres.

Selon l'invention, plutôt que de se contenter de doper le matériau 2 servant à fabriquer le coeur 5 avec du germanium on a également dopé le matériau 3 composant la gaine. De ce fait, au moment de l'insolation, des franges 16 se développent non seulement dans le coeur 5 mais également dans la gaine 3. Là encore, le bas de figure 2 est schématique, ses franges n'étant pas des disques.

La section longitudinale 17 où se développent ces altérations indicielles dépend des limites d'insolation. Elle a une longueur L. Les écarts entre les maxima des différentes altérations occupent un espace A (de l'ordre de 0,5 micromètres) correspondant à l'interfrange. De telles périodes permettent d'obtenir des filtres aux longueurs d'onde de l'infrarouge (environ 1,5 µm). La force de l'altération est liée à la puissance des deux faisceaux lasers 7 et 8, à la durée d'insolation et à la concentration en germanium. Ces grandeurs sont des paramètres utiles pour régler le filtre constitué par la section 17.

La figure 3 montre une courbe 18 représentant symboliquement, et avec quelques exagérations, les effets néfastes des amplificateurs optiques à base de fibre optique dopée à l'erbium (EDFA Erbium Doped Fibre Amplifiers). De tels amplificateurs sont intéressants parce qu'ils ont une grande bande spectrale, centrée sur les longueurs d'ondes utiles dans la transmission optique. Ils présentent cependant l'inconvénient d'imposer une sur-amplification 19 à certains endroits du spectre par rapport à l'amplification 20 à d'autres endroits du spectre. C'est cette sur-amplification 19 qu'il faut combattre avec un filtre interposé dans la propagation des ondes issues de ces amplificateurs.

La courbe 21 représente schématiquement le filtre obtenu par mise en place d'une section 17 filtrante réalisée selon la partie basse de la figure 2. Les caractéristiques du filtre sont sa fréquence caractéristique f0, l'amplitude A de l'atténuation sélective qu'il impose, et sa largeur de bande B. D'une manière connue, f0 dépend de Λ, A dépend du degré d'altération des matériaux photosensibles insérés dans la fibre, et, pour un réseau de Bragg classique à altération droites, B dépend de la longueur L de la section 17. Plus la longueur L est grande plus la largeur de bande B peut être réduite.

Dans l'état de la technique, pour un réseau de Bragg classique à altérations droites il était connu d'augmenter la longueur de la section 6, ou de la section 17, pour améliorer la sélectivité du filtre. Dans l'invention, au contraire on a réduit la longueur de la section filtrante pour qu'elle soit égale ou inférieure à 1 mm. Dans un mode préféré, qui est un optimum, on a pu montrer que la section filtrante devait être égale à 0,7 mm, c'est-à-dire avec plus ou moins 20 %.

Le phénomène mis en oeuvre dans l'invention est le suivant. Du fait du couplage du mode fondamental avec des modes radiatifs discrets, pour lesquels la longueur d'onde λ est un multiple de la période A, le filtre est constitué d'un assemblage de filtres discrets. Autrement dit, la courbe 21 n'est pas la courbe de réponse de filtre mais une enveloppe de maxima de filtrage. Chaque filtre discret y a une largeur relativement étroite. Pour élargir la bande de chacun de ces filtres, on diminue dans l'invention la longueur de filtrage. Dans ce cas, les filtres discrets ont chacun un spectre qui s'élargit. Ils s'interpénètrent les uns dans les autres. Il en résulte que la courbe 21 d'enveloppe devient alors la courbe de réponse du filtre. Celui-ci n'a plus d'oscillations.

Les figures 4a et 4b montrent des diagrammes de filtrage dans une bande utile de 1550 nm à 1566 nm, pour des longueurs de sections filtrantes égales à 0,7 mm et à 1,2 mm respectivement. On constate très nettement que le lissage est meilleur pour 0,7 mm. On distingue bien plus de sur-oscillations dans le cas de la figure 4b : le lissage y est moins bon.

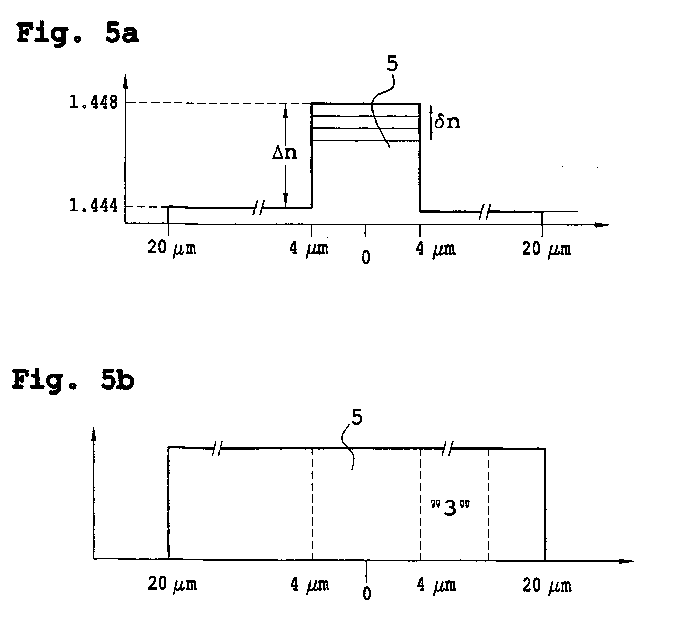

Les figures 5a et 5b montrent respectivement le profil d'indice et un profil de photosensibilité réalisés dans une fibre munie d'un perfectionnement de l'invention. Par rapport à une abscisse 0, centrale au milieu du coeur 5 de la fibre, on distingue de part et d'autre les abscisses, à quatre micromètres environ, des extrémités du diamètre du coeur 5 ainsi que les abscisses, à 20 micromètres environ, des extrémités du diamètre de la gaine 3. Le profil d'indice de réfraction est tel qu'il montre une marche Δn de l'ordre de 0,5 %. Ce profil d'indice est nécessaire pour assurer la propagation d'un seul mode principal optique dans le coeur de la fibre. Ce profil d'indice est obtenu en dopant le coeur de la fibre avec des matériaux ayant cette propriété d'augmentation d'indice de réfraction. Généralement on effectue un dopage au germanium. On peut aussi utiliser du phosphore permettant également d'élever l'indice.

Le germanium présente une photosensibilité utilisable, du fait des modifications des liaisons chimiques et de la structure par insolation, pour constituer le réseau d'altérations indicielles. Ainsi, le long de la section 17, l'indice de réfraction évoluera selon une variation δn progressivement et périodiquement d'une frange à l'autre. La variation δn est une fraction de Δn.

La figure 5b montre que le profil de photosensibilité a été étendu dans le perfectionnement dans tout ou partie du corps de la fibre : dans le coeur 5 et dans une partie de la gaine 3. De préférence, on a étendu le profil de photosensibilité à toute la couche de gaine. Dans cette réalisation préférée, cette couche de gaine a été fixée à 20 µm. Cela a permis d'obtenir une largeur de filtrage de 9 à 10 nm. Il aurait été possible de limiter l'extension à une partie interne de la couche de gaine 3. En jouant sur la largeur de l'extension, dans tout ou partie de la gaine 3 on joue en effet sur la sélectivité du filtre. D'autres conditions permettraient de limiter encore plus la largeur de filtrage.

On a alors pu montrer par les expérimentations que cette disposition permettait d'ajuster la largeur B de filtrage du filtre pour convenir à une application recherchée. Par exemple, dans le cas où cette application concernerait une amplification comme montrée sur la figure 3, on est ainsi capable de compenser la sur-amplification 19 avec une bande de fréquence B du filtre de l'ordre de 8 ou 9 nm. Selon la largeur voulue de B, la partie dopée de la gaine 3 sera plus ou moins épaisse pour aboutir au résultat recherché.

Le fait de doper la gaine de la fibre avec du germanium peut conduire, comme dans le coeur 5, à modifier le profil d'indice dans cette couche externe. On retient normalement un dopage en germanium du coeur avec un pourcentage massique compris entre 0 % et 11 %. Si la gaine 3 est réalisée de la même façon, le profil d'indice ne permet plus de délimiter correctement le coeur 5 de cette gaine 3. La fibre ne pourra plus propager correctement l'onde principale.

Pour remédier à ce problème, on prévoit dans l'invention de doper la gaine 3 avec du fluor. Le fluor a, sur l'indice de réfraction, un effet contraire à celui du germanium. Il réduit l'indice de réfraction au lieu de l'augmenter. En compensant les quantités de fluor et de germanium dans la gaine, on y maintient alors un profil d'indice conforme à celui montré sur la figure 5a, alors que par ailleurs le profil de photosensibilité reste celui de la figure 5b, du fait de la présence du dopage au germanium. Dans ces conditions on est réellement capable de fabriquer une section L filtrante comme celle montrée en bas de la figure 2 où le réseau d'indice s'étend à la totalité ou à une partie de la gaine 3.

Dans l'invention on a ainsi fictivement su augmenter le rayon de coeur en le multipliant par cinq (passage de 4 µm à 20 µm). De ce fait le filtre devient plus sélectif tout en conservant une longueur acceptable.

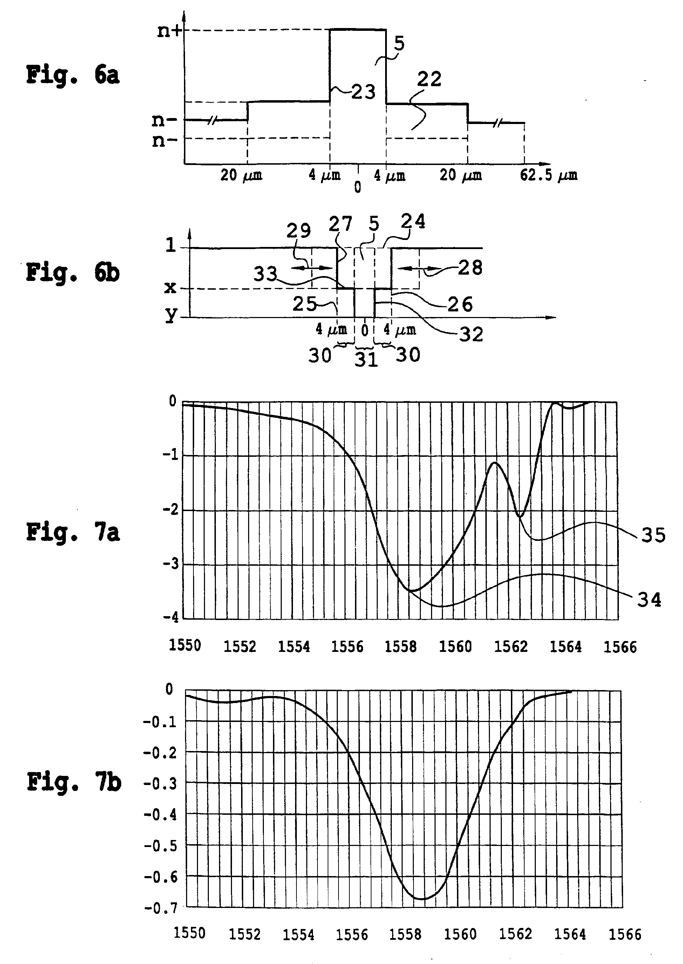

La figure 6a montre à titre de perfectionnement, un profil d'indice de réfaction à réaliser dans la fibre optique. Le coeur 5 de la fibre est ainsi dopé pour atteindre un indice de réfraction n+, par exemple une valeur comprise entre 1,448 et 1,452. Dans la partie interne 22 de la gaine 3 (dans l'exemple préféré, la partie interne 22 correspond à toute la gaine), on a par ailleurs dopé le matériau servant à la constituer avec du germanium et avec du fluor (ou un autre dopant ayant des mêmes effets). L'effet recherché est de modifier l'indice de réfraction normale du verre de silice. Par exemple ceci peut conduire, dans la partie 22 la gaine 3 de la fibre optique à avoir un indice de réfraction n- de l'ordre de 1,440 à 1,446. Une marche 23 d'indice ainsi réalisée à la séparation coeur 5 - gaine 3 est alors égale à n+ - n-. Dans le cas d'un diamètre de gaine 3 élevé, par exemple 20 µm, on peut considérer que cette marche d'indice est la marche d'indice nécessaire à une propagation monomode. On verra par la suite comment interviennent ces différents facteurs pour perfectionner le filtre de l'invention. Notamment, après avoir choisi le diamètre de la partie de la gaine dopée au germanium pour satisfaire à la contrainte de largeur du filtre, on a recherché la valeur de la marche d'indice An optimale pour que l'enveloppe de filtrage soit la plus lisse possible. Par exemple pour un diamètre de coeur de 8 µm, on a trouvé qu'une marche d'indice de 5.10⁻³ (1,449-1,444) était la mieux adaptée. Les différents dopants de gaine servent à régler cette marche dans la zone 22.

La figure 6b montre un profil de photosensibilité réalisé dans la fibre. Ce profil de photosensibilité est normalisé à 1. Cette valeur normalisée correspond à une concentration donnée de matériau dopant photosensible, réparti en différents endroits de la fibre, ainsi qu'à un procédé commun à toute la fibre d'insolation du matériau photosensible. La figure 6b est donc en résumé représentative de la concentration du matériau dopant photosensible dans les différentes parties de la fibre. Elle montre une inversion de photosensibilité, des parties externes de la fibre étant plus photosensibles que des parties internes.

Dans l'état de la technique, représenté par le haut de la figure 2, seul le matériau 2 servant pour le coeur de la fibre était dopé avec du matériau photosensible. Ceci est par exemple rappelé sur la figure 6b par les tracés 24, 25 et 26 qui marquent le niveau de la concentration en produit dopant, (en germanium), et les limites en abscisses (à 4 µm de part et d'autre du centre du coeur 5) de l'endroit où le produit dopant était implanté. Dans l'invention on va essentiellement créer une marche 27 de photosensibilité qui présente la particularité qu'une partie interne de la fibre, ici par exemple le coeur 5, présente un indice de photosensibilité (donc une concentration en matériau photosensible altérable) inférieur à un indice de photosensibilité d'une partie extérieure, par exemple la couche interne 22 de gaine. Le profil de sensibilité est donc inversé.

La marche 27 implique alors que, dans la couche 22 de gaine, du matériau photosensible est présent. Pour éviter alors le déplacement de la marche 23 d'indice de réfraction au-delà du coeur 5, il est prévu que dans la partie 22 les effets du dopage en matériau photosensible sur l'indice de réfraction soient compensés par un dopage avec un matériau ayant un effet contraire de ce point de vue : par exemple avec du fluor. Dans ces conditions il est possible que la marche 27 soit déplacée, au-delà de la marche 23, selon les flèches 28, 29 (symétriquement) dans la partie 22 de la gaine. De ce fait, même si la limite 27 de dopage en germanium n'est pas placée à l'endroit 23 de la transition coeur gaine, elle n'empêchera pas le bon fonctionnement en guidage de la fibre optique puisque la marche d'indice 23 sera maintenue au même endroit.

Plutôt que de déplacer la marche 27 inversée de photosensibilité dans la gaine 3, il peut être réalisé un coeur 5 de fibre ayant une concentration en matériau photosensible nominale dans une partie externe, notamment une couronne 30, mais ayant un déficit, voire une absence totale de matériau photosensible dans une partie centrale 31 du coeur 5. Il n'y a pas de difficulté à obtenir une telle réalisation puisque dans la pratique, les matériaux 2 et 3 de coeur et de gaine de la figure 1 sont eux même réalisés sous forme de couronnes concentriques, pouvant être réalisées avec des matériaux différents. La particularité de l'invention se situe donc ici dans le fait que la partie centrale 31 du coeur 5 sera munie d'un dopant contribuant à la marche 23 d'indice de réfraction (par exemple du phosphore) mais ne contribuant pas, ou moins, à l'indice de photosensibilité dans cette partie.

En combinant les deux techniques, la marche d'indice de photosensibilité peut même être remplacée par une double marche 27-32 de photosensibilité. Dans ce cas, le profil de photosensibilité présente un escalier 33. Les niveaux relatifs x et y de photosensibilité ainsi que les abscisses des marches 27 et 32 permettent d'ouvrir un vaste domaine de réglage et de choix des différents paramètres du filtre. Sur la figure 6b, y vaut 0 mais ce n'est pas une obligation. En établissant l'inversion de la figure 6b on aboutit au résultat recherché que le rebond de réflexion résiduelle du mode principal dans le filtre est neutralisé.

La figure 7a, représente, pour un filtre dans lequel les altérations d'indice sont inclinées de 3°, et pour lequel la longueur L de la section filtrante est égale à 0,7 mm, la courbe caractéristique de filtrage alors que l'indice de photosensibilité est classique (avec une photosensibilité nominale 24 dans le coeur de la gaine). Dans ce cas, le filtrage est obtenu par un pic d'atténuation 34 qui résulte du couplage du mode principal dans des modes de gaine, ici à une fréquence centrale correspondant sensiblement à 1558,2 nm de longueur d'onde.

La figure 7a montre qu'à coté du pic 34 recherché, le filtre ainsi réalisé provoque une réflexion 35 dans un mode fondamental centré à f0 de l'ordre de 1562,2 nm. Autant l'atténuation 34 est recherchée, autant le pic 35 est en fait néfaste. Il se pourrait alors que la fréquence de l'atténuation 35 soit située pour une application donnée, au milieu d'une bande à transmettre. Dans ce cas l'intervention intempestive de l'atténuation 35 serait rédhibitoire.

Sur la figure 7b, on a montré l'amélioration essentielle apportée par le perfectionnement de l'invention : la suppression du pic de réflexion 35. Par ailleurs, le gain de filtrage avec un tel filtre peut être de 0,7 dB alors qu'il culmine à 4 dB avec le filtre de la figure 7a. En conséquence dans l'invention, si une forte atténuation est nécessaire, on juxtaposera dans la fibre plusieurs sections 17 de filtrage, suffisamment espacées les unes des autres, et apportant chacune une contribution lissée de filtrage.

Selon un autre perfectionnement de l'invention, on s'est rendu compte ensuite qu'il y avait même un optimum auquel on aboutissait quand on voulait retenir certains paramètres de fabrication pour supprimer le mode de réflexion fondamental 35 situé sur le bord de la bande de filtrage du filtre vers les basses fréquences.

Dans l'invention, on a pu montrer que l'obtention d'un optimum était à chaque fois possible, quels que soient les paramètres n+, n-, x, y, abscisse 27 ou abscisse 32 qu'on modifiait, ainsi que quels que soient le taux de concentration en produit dopant correspondant à la concentration nominale (niveau 1 nominal) et le degré d'altération déterminé.

La méthode de choix des paramètres de la fibre est la suivante. On choisit d'abord la largeur de la zone 22 pour satisfaire à des contraintes de largeur de filtrage. On choisit ensuite une marche d'indice Δn pour avoir un filtre à peu près symétrique. Puis on règle la hauteur de l'inversion pour éliminer le rebond 35. Enfin on choisit la longueur de la section 17 pour parfaire le lissage. Ainsi, un filtre atténuant non réflecteur d'une largeur spectrale de 9 nm peut être réalisé avec un réseau d'indice, d'inclinaison 3°, dans une fibre à gaine photosensible d'épaisseur 20 µm. Un optimum a pu être trouvé sur la forme du filtre pour une marche d'indice de 5.10⁻³. Puis, en ce qui concerne le profil de photosensibilité, un optimum a été trouvé afin de réduire la réflexion dans le mode fondamental. Cet optimum est un rapport de photosensibilité entre le coeur et la gaine de 20 %. Il peut être compris entre 10 % et 60 % pour d'autres fonctions de filtrage recherchées.

La figure 7b correspond ainsi au cas de la figure 6b dans laquelle il n'y a pas de zone 31, et dans laquelle la valeur de x est de 20%. Dans cet exemple, la concentration en germanium dans la gaine est de l'ordre de 5 % en pourcentage massique. Elle est donc de 1 % en pourcentage massique dans tout le coeur 5 de la fibre.

## Revendications

1. Fibre optique filtrante à réseau de Bragg comportant un coeur (5) de fibre dopé avec un matériau à indice de réfraction altérable par effet photonique, et une gaine (3) de fibre, une section longitudinale de la fibre comportant un réseau longitudinal d'altérations indicielles périodiques formant ledit réseau de Bragg, lesdites altérations indicielles étant inclinées de façon telle qu'elles permettent d'assurer le couplage du mode fondamental se propageant dans le coeur (5) de la fibre dans une direction donnée en des modes radiatifs, dits modes de gaine, se propageant dans la gaine (3) dans la direction opposée, ladite fibre étant **caractérisée en ce que** la longueur de ladite section qui comporte ledit réseau longitudinal d'altérations indicielles périodiques inclinées est inférieure à 1 millimétre.

2. Fibre selon la revendication 1, **caractérisée en ce que** la longueur de ladite section longitudinale est égale à 0,7 millimètre.

3. Fibre selon l'une des revendications 1 à 2, **caractérisée en ce que** la gaine est également dopée avec un matériau à indice de réfraction altérable par effet photonique et **en ce que** ce matériau de gaine est lui aussi altéré en un réseau longitudinal d'altérations indicielles, périodiques, et inclinées.

4. Fibre selon l'une des revendications 1 à 3, **caractérisée en ce que** le matériau de dopage du coeur et ou de la gaine est du germanium, l'altération étant obtenue par insolation (7, 8) sélective de ce matériau.

5. Fibre selon l'une des revendications 1 à 4, **caractérisée en ce que** le matériau de la gaine est dopé par un matériau correcteur d'indice de réfraction.

6. Fibre selon l'une des revendications 1 à 5, **caractérisée en ce qu'**une partie interne de la fibre présente un indice de photosensibilité inférieur à l'indice de photosensibilité d'une partie externe à cette partie interne, de préférence avec un rapport de l'ordre de 20 %.

7. Fibre selon la revendication 6, **caractérisée en ce que** les parties interne et externe sont respectivement placées dans le coeur et dans la gaine de la fibre.

8. Fibre selon l'une des revendications 6 à 7, **caractérisée en ce que** les parties internes et externes sont placées dans le coeur de la fibre.

## Claims

1. A filtering optical fiber with a Bragg grating including a fiber core (5) doped with a material of refractive index which may be altered by a photonic effect, and a fiber cladding (3), a longitudinal section of the fiber including a longitudinal array of periodic index alterations, forming said Bragg grating, said index changes being slanted so that they may provide coupling of the fundamental mode propagating in the core (5) of the fiber in a given direction with radiation modes, so-called cladding modes, propagating in the cladding (3) in the opposite direction, said fiber being **characterized in that** the length of said section which includes said longitudinal array of slanted periodic index changes is less than 1 millimeter.

2. The fiber according to claim 1, **characterized in that** the length of said longitudinal section is equal to 0.7 millimeter.

3. The fiber according to any of claims 1 to 2, **characterized in that** the cladding is also doped with a material of refractive index which may be altered by a photonic effect, and **in that** this cladding material is itself also altered into a longitudinal array of periodic and slanted index changes.

4. The fiber according to any of claims 1 to 3, **characterized in that** the dopant material of the core and/or of the cladding is germanium, the alteration being obtained by selective insolation (7, 8) of this material.

5. The fiber according to any of claims 1 to 4, **characterized in that** the material of the cladding is doped with a refractive index correcting material.

6. The fiber according to any of claims 1 to 5, **characterized in that** an internal portion of the fiber has a photosensitivity index less than the photosensitivity index of a portion external to this internal portion, preferably with a ratio of the order of 20%.

7. The fiber according to claim 6, **characterized in that** the internal and external portions are placed in the core and in the cladding of the fiber, respectively.

8. The fiber according to any of claims 6 to 7, **characterized in that** the internal and external portions are placed in the core of the fiber.

## Patentansprüche

1. Filtrierende Glasfaser mit Bragg-Gitter, einen Faserkern (5) aufweisend, der mit einem Material mit einem durch Photoneneffekt veränderbaren Brechungskoeffizienten dotiert ist, und eine Faserhülle (3), wobei ein Längsabschnitt der Faser ein Längsgitter periodischer Indexveränderungen aufweist, die das besagte Bragg-Gitter bilden, wobei die besagten Veränderungen derart geneigt sind, dass mit ihnen die sich im Kern/in den Kernen der Faser (5) in eine bestimmte Richtung ausbreitende Grundschwingung an Strahlungsschwingungen, auch Hüllschwingungen genannt, koppeln können, die sich in der Hülle (3) in entgegengesetzter Richtung ausbreiten, wobei die besagte Faser **dadurch gekennzeichnet ist, dass** die Länge des besagten Abschnitts, der das besagte Längsgitter geneigter periodischer Indexveränderungen aufweist, kleiner ist als 1 Millimeter.

2. Faser nach Anspruch 1, **dadurch gekennzeichnet, dass** die Länge des besagten Längsabschnitts 0,7 Millimeter beträgt.

3. Faser nach einem der Ansprüche 1 bis 2, **dadurch gekennzeichnet, dass** die Hülle ebenfalls mit einem Material mit einem durch Photoneneffekt veränderbaren Brechungskoeffizienten dotiert ist, und **dadurch**, dass dieses Hüllmaterial ebenfalls in ein Längsgitter periodischer geneigter Indexveränderungen verändert wird.

4. Faser nach einem der Ansprüche 1 bis 3, **dadurch gekennzeichnet, dass** das Material zur Dotierung des Kerns und/oder der Hülle Germanium ist, wobei die Veränderung durch selektive Isolierung (7, 8) dieses Materials erfolgt.

5. Faser nach einem der Ansprüche 1 bis 4, **dadurch gekennzeichnet, dass** das Material der Hülle mit einem den Brechungskoeffizienten korrigierenden Material dotiert ist.

6. Faser nach einem der Ansprüche 1 bis 5, **dadurch gekennzeichnet, dass** ein innerer Teil der Faser einen Lichtempfindlichkeitskoeffizienten aufweist, der unter dem Lichtempfindlichkeitskoeffizienten eines äußeren Teils zu diesem inneren Teil liegt, vorzugsweise in einem Verhältnis in der Größenordnung von 20 %.

7. Faser nach Anspruch 6, **dadurch gekennzeichnet, dass** der innere und äußere Teil jeweils im Kern und in der Hülle der Faser platziert sind.

8. Faser nach einem der Ansprüche 6 bis 7, **dadurch gekennzeichnet, dass** der innere und äußere Teil im Kern der Faser platziert sind.
